# FASCICULE DE BREVET EUROPEEN

(11) **EP 0 883 922 B1**
(45) Date de publication et mention de la délivrance du brevet: **26.06.2002**
(21) Numéro de dépôt: 96908317.9
(22) Date de dépôt: 22.04.1996
(51) Int. Cl.: H02G 3/04

(54) **GAINE ANNELEE FENDUE**
GESCHLITZTES WELLROHR
SPLIT GROOVED SHEATH

(30) Priorité: 28.02.1996 FR 9602771
(43) Date de publication de la demande: 16.12.1998
(73) Titulaire: SOFANOU S.A., 25340 Clerval (FR)
(72) Inventeur: STREIT, Bernard, F-25340 Anteuil (FR)
(74) Mandataire: Moinas, Michel
(86) Numéro de dépôt international: IB9600360
(87) Numéro de publication internationale: WO9732379

(56) Documents cités:
- EP-A- 0 114 213
- DE-A- 4 400 695
- DE-U- 8 903 070
- US-A- 3 900 697

## Description

La présente invention est relative à une gaine tubulaire souple annelée, et plus particulièrement à une gaine utilisée pour la protection et le positionnement de faisceaux de fils et câbles électriques.

Les gaines tubulaires annelées, c'est-à-dire celles dont la forme ressemble à une succession d'anneaux reliés les uns aux autres, sont usuellement réalisées en matière plastique, telle que le polypropylène extrudé. Ces gaines permettent la réalisation de réseaux de protection complexes pour des faisceaux de fils ou câbles électriques au sein de navires, avions ou véhicules automobiles, et dans ce dernier cas notamment dans le compartiment moteur. En effet, compte-tenu du faible espace disponible, ces gaines ou tuyaux doivent pouvoir suivre de très près les parois non rectilignes et contourner les différents organes rencontrés. Avec de telles gaines annelées, on peut justement réaliser des courbes dont le rayon de courbure est inférieur à trois fois leurs diamètres sans que celles-ci ne se déforment vers l'intérieur ou même se cassent.

Un mode de réalisation de telles gaines consiste à extruder un tube de plastique, et à le plaquer tout de suite en sortie contre les faces internes annelées d'une double série de coquilles situées en vis-à-vis et progressant avec l'avance du tube au niveau d'une machine dite "mouleuse". On peut ainsi réaliser en continu de grandes longueurs de gaines qui sont par la suite stockées sur des tambours de transport. De tels modes de réalisation sont décrits plus en détail par exemple dans les documents FR 2 171 844, GB 1 250 639 et GB 1 311 205.

Lors de la mise en oeuvre de ces gaines dans un véhicule, on est confronté au problème de l'introduction d'un toron de fils à l'intérieur des tronçons de gaines. Pour un tronçon de gaine rectiligne de l'ordre du mètre, on peut introduire puis pousser les câbles simplement par l'une de ses extrémités. Cette opération devient rapidement plus laborieuse pour des tronçons de longueurs supérieures ou pour des tronçons pré-installés avec plusieurs courbures.

A ce titre, on connaît, par exemple des documents FR 2 264 649 ou DE 24 13 879, des gaines à double paroi : une externe annelée pour la flexibilité, et une interne lisse pour une introduction aisée des câbles. On connaît également, par exemple du document CA 1 302 310, des tubes annelés fabriqués avec un fil inteme d'origine dit "tire-fils" pour la traction ultérieure de câbles. Toutefois, ces gaines requièrent un surplus de matière, et nécessitent des aménagements coûteux des installations de fabrication.

Plus communément, on propose, dans la gamme des gaines annelées de protection, des gaines fendues, c'est-à-dire celles qui ont été coupées selon une ligne droite longitudinale en fin de procédé de réalisation. On peut alors aisément introduire ultérieurement en n'importe quelle zone de la gaine des fils et câbles électriques directement au travers de cette fente qui, normalement, se referme grâce à la rigidité transversale donnée par les cannelures. De telles gaines restent peu coûteuses.

Satisfaisante dans la majorité des circonstances, on constate toutefois que ces gaines fendues peuvent laisser échapper les fils en des zones de faible rayon de courbure où la fente tend à se rouvrir.

Pour remédier à cet inconvénient, il est proposé dans le document DE-U-89 03 070 une gaine extrudée fendue longitudinalement, et dont les bords de la fente sont profilés sous la forme de deux crochets longitudinaux complémentaires. Le bord-crochet orienté vers l'extérieur est surmonté d'une languette de serrage et de maintien de l'autre bord. Toutefois, la complexité du profil de ces crochets en association avec la languette rend la buse d'extrusion et les coquilles de formage particulièrement coûteuses. De plus, la fermeture de la fente par engagement des crochets tout le long de la gaine est pénible, au risque d'être mal réalisée en de nombreux endroits. Les documents EP 0 114 213 et DE 34 05 552 décrivent des variantes de dispositifs de fermeture de fentes encore plus complexes.

Le document US 3,900,697 décrit un tube de protection fendu, dont un des bords de fente se loge sous l'autre bord. Le tube dans son ensemble, y compris les deux bords de fente, est lisse et d'égale épaisseur de paroi. Il est maintenu fermement en sa forme circulaire par sa rigidité transversale.

Le document DE 44 00 695 décrit une gaine tubulaire annelée fendue de protection, dans laquelle les deux bords de fente opposés sont adjacents. La fermeture de la gaine nécessite d'utiliser des colliers de serrage pour forcer l'un des bords de fente à se loger sous l'autre bord.

Le but de la présente invention est une gaine annelée fendue de protection comprenant un moyen de fermeture efficace de la fente, c'est-à-dire un moyen s'ouvrant facilement lors de l'insertion de câbles pour se refermer complètement immédiatement après, et le rester par la suite quelle que soit la forme du parcours ultérieur donné à la gaine une fois installée, et ceci malgré la présence d'éventuelles vibrations. Une telle gaine doit également rester peu coûteuse à réaliser.

Les objectifs sont atteints par une gaine annelée fendue à languette du fait qu'une languette continue longitudinale est ménagée sur un des bords de la fente au niveau du creux des cannelures, cette languette se logeant sous l'autre bord, étant plane et d'épaisseur égale à l'épaisseur de la paroi de la gaine annelée mesurée dans un creux ou dans une crête des cannelures.

De par la presence des cannelures, le profil d'un bord de fente se présente sous la forme d'une ligne ondulée qui peut être définie, par analogie aux dents d'une crémaillère, par un creux de cannelures, une tête de cannelures et une hauteur de cannelures.

Lors de l'introduction du toron dans la gaine selon l'invention, la languette fonctionne à la manière d'un clapet. Ensuite, si cette gaine est amenée à décrire des rayons de courbure très sévères, provoquant sur des gaines usuelles une légère réouverture de la fente, la languette maintient la fente fermée. Les câbles, en exerçant une pression contre les parois de la gaine, appuient en fait la zone de languette correspondante contre l'autre bord, confirmant ainsi le verrouillage de la fermeture. Ainsi, on empêche que les câbles ne se détériorent contre la fente.

Selon un mode de réalisation préféré, l'épaisseur de la languette représente sensiblement l'épaisseur de la paroi du tube annelé, et sa largeur représente en 1/10 et 1/2 du diamètre interne de la gaine, de préférence entre 1/6 et 1/3 du diamètre interne.

Cette largeur de languette constitue un bon compromis entre une ouverture facile de la fente à l'occasion d'une insertion de câble, et une fermeture effective de la fente en condition extrême de courbure de la gaine.

Utilement, les cannelures sont fermées au niveau des bords de la fente par des parois transversales. Cette disposition permet d'assurer un complément d'étanchéité au niveau de la fente contre la poussière et autres produits indésirés, et permet également de rendre la fente moins agressive pour les câbles.

Si désiré, les parois de bords de cannelures peuvent être obliques orientées vers l'extérieur pour faciliter l'introduction du faisceau de câbles.

Un mode de réalisation avantageux d'une gaine selon l'invention consiste à :
- extruder puis mouler une gaine annelée présentant une bande plane longitudinale au niveau des creux de bords de cannelures,
- couper la bande plane le long d'un de ses bords de cannelures pour former une languette solidaire seulement de l'autre bord de cannelures,
- réchauffer la gaine puis la refroidir en la faisant passer par des moyens de restriction, tels que cônes ou calandres, afin de rapprocher les bords de cannelures, la languette passant sous le bord coupé.

Par rapport au procédé de fabrication d'une gaine annelée fendue standard, ce procédé ne nécessite qu'une modification du profil initial de la gaine au niveau de la mouleuse et une opération supplémentaire de retrait thermique, faisant que la gaine selon cette invention reste peu coûteuse à réaliser.

Un dispositif spécialement conçu pour la réalisation du procédé décrit précédemment, ce dispositif comprenant, à la sortie d'une extrudeuse, une mouleuse avec deux séries de coquilles parallèles symétriques dont les faces internes présentent chacune une forme semi-cylindrique striée transversalement par une série de cannelures en arc-en-ciel, est particulièrement remarquable en ce que chaque demi-coquille de l'une des séries présente une proéminence sous la forme d'une bande plane mince située à niveau avec les crêtes de cannelures, ces bandes étant alignées d'une coquille à l'autre.

L'invention sera mieux comprise à l'étude d'un mode de réalisation pris à titre nullement limitatif et illustré dans les figures annexées dans lesquelles :
- la figure 1 est une vue schématique d'un dispositif de fabrication d'une gaine annelée.
- les figures 2a, 2b et 2c illustrent la section d'une gaine en cours de réalisation dans le dispositif selon la figure 1, et
- la figure 3 illustre une portion de gaine en perspective.

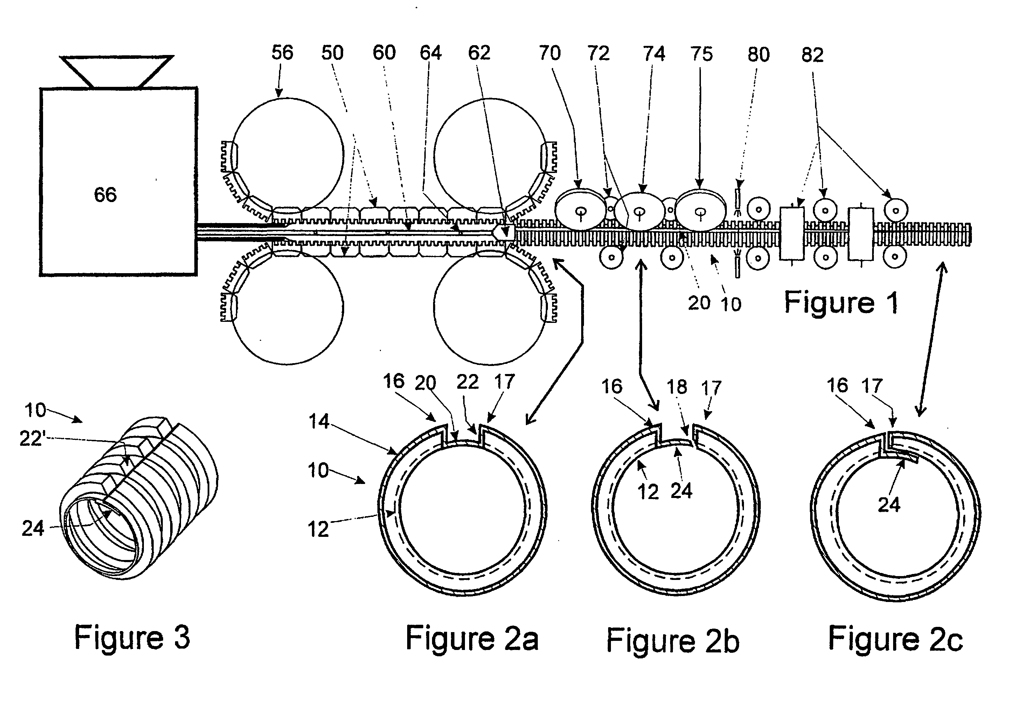

La moitié gauche de la figure 1 illustre un dispositif conventionnel de fabrication de tubes annelés 10. Ce dispositif comprend notamment, à la sortie d'une extrudeuse 66, une mouleuse comprenant deux séries de coquilles 50 parallèles symétriques, chacune entraînée en amont et en aval par une paire de roues dentées de renvoi 56. La face interne de chaque coquille 50 présente une forme semi-cylindrique striée transversalement par une série de cannelures en arc-en-ciel d'angle au sommet de 180 degrés. Ainsi deux coquilles, une de chaque série, situées en vis-à-vis, forment ensemble le pourtour complet d'une portion de gaine annelée 10.

Par ailleurs, un mandrin 60 émergeant hors de la sortie de l'extrudeuse 66 porte en son extrémité un bouchon de fermeture 62 isolant la partie aval de gaine annelée 10. Une surpression atmosphérique peut alors être appliquée entre ce bouchon de fermeture et la sortie de l'extrudeuse par injection d'air comprimé sortant d'ouvertures 64 du mandrin. Ainsi, un tube de plastique encore chaud en sortie d'extrudeuse est immédiatement plaqué dans les cannelures des coquilles 50 pour en prendre sa forme annelée définitive.

Plus particulièrement selon l'invention, chaque demi-coquille de l'une des séries, par exemple la série supérieure sur la figure 1, présente une proéminence sous la forme d'une bande plane mince située à niveau avec les crêtes de cannelures, ces bandes étant alignées d'une coquille à l'autre.

Comme illustré sur la figure 2a, la gaine annelée 10 sortant des coquilles 50 présente une bande plane 20 continue au niveau de sa face interne, c'est-à-dire au niveau de ses creux de cannelures 12. Cette bande plane constitue un renfoncement délimité par deux bords de cannelures 16 et 17. Ces bords de cannelures se présentent donc sous la forme de lignes crénelées oscillant entre des creux de cannelures 12 et des crêtes de cannelures 14. De par le mode de répartition de la matière plastique par surpression, l'épaisseur de cette bande plane 20 est sensiblement égale à l'épaisseur du tube telle que, par exemple, mesurée dans un creux ou une crête de cannelures. On note également que les bords des cannelures 16 et 17 sont bouchés, c'est-à-dire que les crêtes de cannelures sont fermées par des parois radiales transversales 22.

En alternative, et comme mieux visible sur la figure 3, la proéminence de coquilles peut présenter une section trapézoïdale. Alors, les parois 22' des bords de fentes sont obliques orientées vers l'extérieur.

Dans la station suivante, la gaine 10 menée par des galets ou autres moyens de guidage 72 est maintenue avec sa bande 20 orientée très précisément vers le haut par un disque d'orientation 70 supérieur engagé dans cette bande. Un disque ou autre moyen de coupe 74 immédiatement en aval peut alors effectuer en continu une séparation 18 (figure 2b) exactement entre la bande et le second bord 17 de cannelures, réalisant ainsi une languette 24 solidaire uniquement du creux de cannelures 12 du premier bord 16 comme mieux visible sur la figure 2b. La gaine 10 ainsi fendue est encore maintenue en aval avec sa languette orientée vers le haut par un disque ou autre moyen de maintien supérieur 75, qui, en étant légèrement plus bas que le premier disque de guidage 70, assure simultanément un abaissement de la languette 24 en dessous du second bord 17.

Dans la station suivante, la gaine fendue est alors réchauffée par des moyens thermiques 80 tels que des buses d'air chaud ou des plaques rayonnantes jusqu'à une température autorisant une déformation plastique permanente, cette température dépendant de la composition du plastique composant la gaine. En cours de refroidissement, la gaine passe alors par une série de cônes ou calandres 82 de diamètres de sortie de plus en plus petits, ces cônes ou calandres resserrant la gaine jusqu'à ce que les bords de cannelures 16 et 17 deviennent adjacents, la languette 24 étant entièrement passée sous le second bord 17. La gaine entièrement refroidie en sortie conserve alors définitivement la forme de la section illustrée sur la figure 2c.

Lors de la mise en oeuvre de la gaine, l'opérateur comprend aisément qu'il lui faut appuyer simplement sur le premier bord 16 pour ouvrir la fente, la languette 24 solidaire de ce bord 16 s'écartant également du second bord 17. On peut ainsi introduire une première boucle de câbles, et, de proche en proche, appuyer sur les zones adjacentes de bords 16 pour poursuivre l'introduction du câble sur une longueur désirée. Dès que le câble pénètre suffisamment dans la gaine pour dépasser la languette 24, celle-ci se referme automatiquement à la manière d'un clapet de par son élasticité et celle du bord 16.

Par la suite, si la gaine se voit imposer une courbure telle que les bords de cannelures 16 et 17 viennent à s'écarter, on constate que la languette 24 maintient la gaine fermée à ce niveau, empêchant ainsi la sortie des câbles.

De nombreuses améliorations peuvent être apportées à cette gaine et à son procédé de réalisation dans le cadre des revendications. Par exemple, la proéminence plane des coquilles 50 du dispositif de fabrication modifié selon l'invention peut présenter une arête vive le long de l'un de ses bords longitudinaux pour préparer la coupe ultérieure 18. Le refroidissement de la gaine fendue peut être accéléré par un jet d'air froid ou par passage dans un bac d'eau froide.

## Revendications

1. Gaine (10) tubulaire annelée fendue de protection **caractérisée en ce qu'**une languette (24) continue longitudinale est ménagée sur un des bords (16) de la fente, au niveau du creux des cannelures (12), cette languette se logeant sous l'autre bord (17), étant plane et d'épaisseur égale à l'épaisseur de la paroi de la gaine annelée mesurée dans un creux ou dans une crête des cannelures.

2. Gaine selon la revendication 1, **caractérisée en ce que** la largeur de la languette (24) est comprise entre 1/10 et 1/2 du diamètre interne de la gaine.

3. Gaine selon l'une des revendications précédentes, **caractérisée en ce que** les cannelures sont fermées au niveau des bords (16,17) de la fente par des parois transversales (22).

4. Gaine selon la revendication 3, **caractérisée en ce que** les parois (22') de bords de cannelures sont obliques orientées vers l'extérieur.

5. Procédé de réalisation d'une gaine selon l'une des revendications précédentes, **caractérisé en ce qu'**il consiste à:
- extruder puis mouler une gaine annelée (10) présentant une bande plane (20) longitudinale au niveau des creux de bords de'cannelures (12),
- couper (18) la bande plane le long d'un de ses bords (17) de cannelures pour former une languette (24) solidaire seulement de l'autre bord (16) de cannelures, réchauffer (80) la gaine puis la refroidir en la faisant passer par des moyens de restriction (82) afin de rapprocher les bords (16,17) de cannelures, la languette (24) passant sous le bord coupé (17).

6. Dispositif pour la mise en oeuvre du procédé selon la revendication 6, ce dispositif comprenant, à la sortie d'une extrudeuse (66), une mouleuse avec deux séries de coquilles (50) parallèles symétriques dont les faces internes présentent chacune une forme semi-cylindrique striée transversalement par une série de cannelures en arc-en-ciel, **caractérisé en ce que** chaque demi-coquille de l'une des séries présente une proéminence sous la forme d'une bande plane mince située à niveau avec les crêtes de cannelures, ces bandes étant alignées d'une coquille à l'autre.

## Patentansprüche

1. Geschlitztes Wellrohr (10) zum Schutz, **dadurch gekennzeichnet, dass** eine sich über seine Länge erstreckende Zunge (24) mit einem der Ränder (16) des Schlitzes in Höhe der Vertiefung der Hohlkehlen (12) verbunden ist, wobei diese Zunge eben ist und sich unter den anderen Rand (17) erstreckt, und wobei ihre Dicke gleich der Dicke der Wandung des Wellrohres, gemessen in einer Vertiefung oder auf einem Grat der Hohlkehlen, ist

2. Rohr nach Anspruch 1, **dadurch gekennzeichnet, dass** die Breite der Zunge (24) zwischen 1/10 und 1/2 des Innendurchmessers des Rohres beträgt.

3. Rohr nach einem der vorangehenden Ansprüche, **dadurch gekennzeichnet, dass** die Hohlkehlen auf Höhe der Ränder (16,17) des Schlitzes durch Seitenwände (22) geschlossen sind.

4. Rohr nach Anspruch 3, **dadurch gekennzeichnet, dass** die Wände (22') der Ränder der Hohlkehlen schräg nach außen orientiert sind.

5. Verfahren zur Herstellung eines Rohres nach einem der vorangehenden Ansprüche, **dadurch gekennzeichnet, dass** es folgendes aufweist:
- Extrudieren und anschließendes Formen eines Wellrohres (10), welches ein ebenes, sich längs erstreckendes Band (20) in Höhe der Vertiefung der Hohlkehlen aufweist,
- Aufschneiden (18) des ebenen Bandes entlang eines seiner Ränder (17) der Hohlkehlen, um eine Zunge (24) zu erzeugen, die nur mit dem anderen Rand (16) der Hohlkehlen verbunden ist,
- Wiedererhitzen (80) des Rohres und anschließendes Wiederabkühlen während es Einschnürmittel durchläuft, damit sich die Ränder (16,17) der Hohlkehlen einander annähern und die Zunge (24) unter den geschnittenen Rand (17) gelangt.

6. Vorrichtung zum Durchführen des Verfahrens nach Anspruch 6, wobei diese Vorrichtung nach dem Ausgang eines Extruders (66) eine Formgebungseinheit mit zwei Reihen paralleler, symmetrischer Formen aufweist, deren innere Oberflächen jeweils eine halbzylindrische quergeriefte Form für eine Reihe von bogenförmigen Hohlkehlen aufweisen, **dadurch gekennzeichnet, dass** jede Halbform einer dieser Reihen einen Vorsprung in Form eines dünnen, ebenen Bandes auf Höhe der Grate der Hohlkehlen aufweist, wobei diese Bänder eine Form mit der anderen verbinden.

## Claims

1. Split annulate tubular protective sheath (10), **characterised in that** a continuous longitudinal tongue (24) is formed on one of the edges (16) of the slot level with flute hollow (12), this tongue being lodged beneath the other edge (17), being flat and having a thickness substantially equal to the thickness of the wall of the annulate tube, measured in a hollow or in a crest of the fluting.

2. Sheath according to claim 1, **characterised in that** the width of the tongue (24) is between 1/10 and ½ of the internal diameter of the sheath.

3. Sheath according to any one of the preceding claims, **characterised in that** the flutes are closed level with the edges (16, 17) of the slot by transverse walls (22).

4. Sheath according to claim 4, **characterised in that** the flute edge walls (22') are oblique and oriented towards the outside.

5. Method of producing a sheath according to any one of the preceding claims, **characterised in that** it consists of:
- extruding and then moulding an annulate sheath (10) having a longitudinal flat strip (20) level with the flute edge hollows (12),
- cutting (18) the flat strip along one of its flute edges (17) to form a tongue (24) integral only with the other flute edge (16),
- heating (80) the sheath and then cooling it by passing it through restriction means (82), so as to bring the flute edges (16, 17) together, the tongue (24) passing beneath the cut edge (17).

6. Device for implementing the method according to claim 6, this device comprising, at the outlet of an extruder (66), a moulding machine with two series of symmetrical parallel shells (50) whose internal faces each have a semi-cylindrical shape ribbed transversely with a series of rainbow-shaped flutes, **characterised in that** each half-shell in one of the series has a protuberance in the form of a thin flat strip situated level with the flute ridges, these strips being aligned from one shell to the next.
